# EUROPÄISCHE PATENTSCHRIFT

(11) **EP 1 797 448 B1**
(45) Veröffentlichungstag und Bekanntmachung des Hinweises auf die Patenterteilung: **13.06.2012**
(21) Anmeldenummer: 05761183.2
(22) Anmeldetag: 20.07.2005
(51) Int. Cl.: G01S 13/58, G01S 13/34

(54) **VERFAHREN ZUR OBJEKTVERIFIKATION IN RADARSYSTEMEN FÜR KRAFTFAHRZEUGE**
OBJECT VERIFICATION METHOD IN RADAR SYSTEMS FOR MOTOR VEHICLES
PROCEDE DE VERIFICATION D'OBJETS DANS DES SYSTÈMES DE RADAR POUR DES VEHICULES À MOTEUR

(30) Priorität: 29.09.2004 DE 102004047087
(43) Veröffentlichungstag der Anmeldung: 20.06.2007
(73) Patentinhaber: ROBERT BOSCH GMBH, 70442 Stuttgart (DE)
(72) Erfinder: RANDLER, Martin, 70569 Stuttgart (DE); JORDAN, Ruediger, 70435 Stuttgart (DE)
(86) Internationale Anmeldenummer: PCT/EP2005/053517
(87) Internationale Veröffentlichungsnummer: WO 2006/034894

(56) Entgegenhaltungen:
- EP-A- 0 939 322
- EP-A- 1 522 873
- DE-A1- 19 538 309
- US-A1- 2004 174 292
- LISSEL E ET AL: "RADAR SENSOR FOR CAR APPLICATIONS" PROCEEDINGS OF THE VEHICULAR TECHNOLOGY CONFERENCE. STOCKHOLM, JUNE 8, Bd. VOL. 1 CONF. 44, 8. Juni 1994 (1994-06-08), Seiten 438-442, XP000496712
- ROHLING H ET AL: "Waveform design principles for automotive radar systems" PROCEEDINGS OF CIE. INTERNATIONAL CONFERENCE ON RADAR, 15. Oktober 2001 (2001-10-15), Seiten 1-4, XP002239085

## Beschreibung

### Stand der Technik

Die Erfindung betrifft ein Verfahren zur Objektverifikation in Radarsystemen für Kraftfahrzeuge, bei denen Abstände und Relativgeschwindigkeiten von georteten Objekten anhand von empfangenen Radarechos bestimmt werden. Weiterhin bezieht sich die Erfindung auf ein Fahrerassistenzsystem, in dem ein solches Verfahren implementiert ist.

In Fahrerassistenzsystemen für Kraftfahrzeuge werden Radarsysteme zur Erfassung des Verkehrsumfelds eingesetzt, insbesondere zur Ortung von vorausfahrenden Fahrzeugen und potentiellen Hindernissen im Vorfeld des eigenen Fahrzeugs. Typisches Anwendungsbeispiel ist ein ACC-System (Adaptive Cruise Control) zur automatischen Regelung des Abstands zu einem vorausfahrenden Fahrzeug. Außerdem sind Fahrerassistenzsysteme in Entwicklung, die vor allem der Steigerung der Verkehrssicherheit dienen, beispielsweise automatische Kollisionswarnsysteme oder Kollisionsvermeidungssysteme, die bei akuter Kollisionsgefahr automatisch eine Notbremsung auslösen.

Wenn mit Hilfe eines Radarsystems sowohl die Abstände als auch die Relativgeschwindigkeiten der georteten Objekte bestimmt werden sollen, so müssen aus den empfangenen Radarechos für jedes Objekt mindestens zwei Meßgrößen abgeleitet werden, aus denen sich der Abstand und die Relativgeschwindigkeit berechnen lassen. Wenn mehrere Objekte gleichzeitig geortet werden, besteht das Problem, daß die Meßgrößen in richtiger Weise den Objekten zugeordnet werden müssen. Falsche Zuordnungen führen zur Ortung von Scheinobjekten, denen kein reales Objektes entspricht. Bei sicherheitsrelevanten Systemen wie z.B. Kollisionsvermeidungssystemen müssen solche Scheinobjekte zuverlässig eliminiert werden, weil sie sonst zu Fehlauslösungen führen würden, die ihrerseits ein Sicherheitsrisiko darstellen können.

Es sind Verfahren bekannt, mit denen sich reale Objekte verifizieren und Scheinobjekte eliminieren lassen. Ein Beispiel für ein in Fahrerassistenzsystemen gebräuchliches Radarsystem ist ein sogenanntes FMCW-Radar (Frequency Modulated Continuous Wave). Bei diesem System wird die Frequenz des gesendeten Radarsignals rampenförmig moduliert, und das empfangene Signal wird mit dem zum Empfangszeitpunkt gesendeten Signal gemischt, so daß man ein Zwischenfrequenzsignal erhält, dessen Frequenz dem Frequenzunterschied zwischen gesendetem und empfangenen Signal entspricht. Dieser Frequenzunterschied ist einerseits von der Signallaufzeit und damit vom Abstand des georteten Objekts und andererseits von der Dopplerverschiebung und damit der Relativgeschwindigkeit des Objekts abhängig. Für eine eindeutige Bestimmung des Abstands und der Relativgeschwindigkeit sind zwei Messungen mit unterschiedlichen Rampensteigungen erforderlich. Wenn beispielsweise mit einer steigenden und einer fallenden Rampe mit dem Betrage nach gleicher Steigung gearbeitet wird, so löschen sich in der Summe der Zwischenfrequenzen die abstandsabhängigen Anteile gegenseitig aus, so daß sich die Relativgeschwindigkeit bestimmen läßt. Bildet man dagegen die Differenz der Zwischenfrequenzsignale, so werden die von der Relativgeschwindigkeit abhängigen Anteile eliminiert, und man kann den Abstand berechnen. Wenn jedoch gleichzeitig zwei verschiedene Objekte geortet werden, so erhält man je zwei Zwischenfrequenzen für die steigende und die fallende Rampe, und es gibt zwei mögliche Paarungen für die Summen- und Differenzbildung, so daß das Ergebnis nicht eindeutig ist. Die "falsche" Paarung entspricht dann einem Scheinobjekt.

Diese Mehrdeutigkeit läßt sich beseitigen, indem die gesendete Frequenz mit einer dritten Rampe moduliert wird, deren Steigung von derjenigen der beiden anderen Rampen verschieben ist. Die für eine einzelne Rampe erhaltene Zwischenfrequenz definiert eine Beziehung zwischen dem Abstand und der Relativgeschwindigkeit. Eine reales Objekt läßt sich dann daran erkennen, daß die für die drei verschiedenen Rampen erhaltenen Beziehungen miteinander konsistent sind, d. h., ein eindeutig lösbares Gleichungssystem bilden.

Mit zunehmender Anzahl der gleichzeitig georteten Objekte steigt jedoch die Wahrscheinlichkeit, daß zufällig auch das für ein Scheinobjekt erhaltene Gleichungssystem eine - innerhalb der Genauigkeitsgrenzen - eindeutige Lösung hat. In diesem Fall kann das Scheinobjekt mit dem bisher bekannten Verfahren nicht eliminiert werden.

Für das Auftreten von Scheinobjekten gibt es auch noch eine Reihe weiterer Ursachen. Eine häufige Ursache ist z. B. der sogenannte "Clutter" von periodischen Standzielen wie Leitplankenpfosten am Straßenrand und dergleichen. Solche Objekte können Überlagerungseffekte bewirken, mitder Folge, daß Detektionen quasi-zufällig in den einzelnen FMCW-Rampen erzeugt werden. Diese Detektionen können u. U. miteinander oder mit den Detektionen realer Objekte zu Scheinobjekten kombiniert werden.

Aus der nicht vörveröffentlichten EP 1.522 873 A1 ist ein Ortungsgerät mit mehrere Sensoren zur Messung der Abstände von Objekten bekannt, mit einem Triangulationsmodul zur Berechnung der Ortskoordinaten der Objekte anhand der gemessenen Abstände und einem Auswahlmodul zur Unterscheidung zwischen echten Objekten und Scheinobjekten anhand von Plausibilitätskriterien, wobei ein Geschwindigkeitsmodul dazu vorgesehen ist, zumindest die ersten zeitlichen Ableitungen der Ortskoordinaten direkt anhand der zeitlichen Ableitungen der gemessenen Abstände zu berechnen, und daß im Auswahlmodul mindestens ein Plausibilitätskriterium implementiert ist, das die berechneten zeitlichen Abteitungen der Ortskoordinaten auswertet.

Aus der EP 0 939 322 A2 ist ein computerisiertes Radarverfahren zur Messung von Abständen und Relativgeschviriridigkeiteri zwischen einem Fahrzeug und mehreren vor ihm befindlichen Hindernissen bekannt, wobei eine sichere Unterscheidung zwischen tatsächlichen Hindernissen und Scheinhindemissen mit kurzer Auswertezeit durch vier Verfahrensschritte erreicht wird. Wesentliches Merkmal der drei ersten Verfahrensschritte ist die Aussendung jeweils frequenzkonstanter Bursts, die in einem Frequenz-Zeit-Diagramm eine linear ansteigende, eine linear abfallende sowie eine frequenzkonstante lineare Folge bilden. Am Ende jedes reflektierenden Bursts, also bei eingeschwungener Phase, wird ein komplexer Abtastwert erfaßt, und in einem Relativgeschwindigkeits-Abstands-Diagramm werden potentielle Hindernisse als Schnittpunkte von Geraden erfaßt, die aus den reflektierten linearen Burstfolgen gewonnen sind. Mittels einer speziellen Korrelation erfolgt dann im Rechner eine Aussortierung von Geisterhindemissen, und nur die Empfahgswerte für die verbleibenden Hindernisse werden weiter verarbeitet.

Aus der DE 195 38 309 Al ist ein CW-Radarverfahren zur Messung von Abständen und Relativgeschwindigkeiten zwischen einem Fahrzeug und einem oder mehreren Hindernissen bekannt, bei dem das Sendesignal aus frequenzkonstanten, ohne zeitlichen Abstand zueinander folgenden Bursts oder Abschnitten besteht. Erfindungsgemäß erfolgt eine Demodulation der an den Hindernissen reflektierten Empfangssignale mit Hilfe der ausgesendeten Sendesignale durch nur einen einkanaligen Mischer, dessen Ausgangssignal nicht das Signal einer Phasensondern einer Amplitudenkurve ist, das wiederum die Grundlage für eine in ihrer Struktur gegenüber dem bekannten Verfahren neuen Signalauswertung bildet.

### Vorteile der Erfindung

Die Erfindung mit den in Anspruch 1 angegebenen Merkmalen ermöglicht insbesondere bei geringen Objektabständen eine zuverlässigere Eliminierung von Scheinobjekten.

Dies wird erfindungsgemäß dadurch erreicht, daß in den empfangenen Radarechos nach der Signatur von Mehrfachflexionen gesucht wird.

Das vom Radarsensor gesendete Signal wird an einem georteten Objekt, beispielsweise an der Rückfront eines vorausfahrenden Fahrzeugs, reflektiert, und ein Teil des reflektierten Signals wird wieder vom Radarsensor empfangen. Ein weiterer Teil dieses Signals wird jedoch an der Vorderfront des eigenen Fahrzeugs reflektiert und läuft wieder zum Objekt zurück, wo es erneut reflektiert wird. Wenn der Objektabstand nicht zu groß ist, erfaßt der Radarsensor auch dieses mehrfach reflektierte Signal noch mit einer über dem Rauschpegel liegenden Amplitude. Wenn dieses mehrfach reflektierte Signal als ein Objekt interpretiert wird, so handelt es sich um ein Scheinobjekt. Da das Signal die Distanz zum Objekt und zurück zweimal zurückgelegt hat und durch die Mehrfachreflexionen auch zweimal eine Dopplerverschiebung erfahren hat, erhält man für das Scheinobjekt im Verhältnis zu dem zugehörigen realen Objekt gerade den doppelten Abstand und die doppelte Relativgeschwindigkeit. Entsprechend würde man bei Mehrfachreflexionen höherer Ordnung Scheinobjekte erhalten, deren Abstände und Relativgeschwindigkeiten ganzzahlige Vielfache der Abstände und Relativgeschwindigkeiten des realen Objekts sind. Diese charakteristische Signatur von Mehrfachreflexionen macht man sich erfindungsgemäß zunutze, um reale Objekte zuverlässig**er** zu verifizieren.

Dabei geht man davon aus, daß zu einem realen Objekt bei nicht zu großem Abstand auch ein "Schatten" existieren muß, d.h., ein Scheinobjekt, das durch Mehrfachreflexion entstanden ist. Einen solchen "Schatten" gibt es aber nur für reale Objekte und normalerweise nicht für Scheinobjekte. Nur in Ausnahmefällen, wenn sich alle an der fehlerhaften Kombination beteiligten Objekte im Nahberich befinden und einen passenden Schatten haben, kann auch für das Scheinobjekt die Existens eines Schattens vorgetäuscht werden. Dies ist in der Praxis jedoch nur äußerst selten der Fall.

Wenn schon die Wahrscheinlichkeit, das ein Scheinobjekt nach dem herkömmlichen Verfahren fälschlich als ein reales Objekt interpretiert wird, relativ gering ist, so ist die Wahrscheinlichkeit, daß zu diesem Scheinobjekt zufällig auch noch ein "Schatten" existiert, noch um ein Vielfaches geringer. Auf diese Weise wird die Zuverlässigkeit der Objektverifikation deutlich gesteigert.

Da die durch Clutter erzeugten Scheinobjekte überwiegend auf Überlagerungseffekten beruhen und nicht mit Mehrfachreflexionen einhergehen, wird auch diese Ursache für Scheinobjekte weitgehend eliminert.

In Fahrerassistenzsystemen, die zur Kollisionswarnung oder Kollisionsvermeidung dienen, sowie in sogenannten Pre-Crash-Systemen, mit denen passive Sicherheitssysteme wie Gurtstraffer und Airbags auf eine bevorstehende Kollision vorbereitet werden, ist ein wesentlicher Parameter die sogenannte "Time to Collision" (TTC), d.h., die Zeit, die bis zum Aufprall auf das geortete Objekt noch vergehen wird, wenn man eine konstante Relativgeschwindigkeit unterstellt. Je kleiner die TTC, desto größer ist die Kollisionsgefahr. Da bei einem realen Objekt und seinen "Schatten" die Abstände und die Relativgeschwindigkeiten in dem gleichen ganzzahligen Verhältnis zueinander stehen, erhält man für den Schatten die gleiche TTC wie für das reale Objekt. Die Objektverifikation kann dann einfach darin bestehen, daß man eine TTC genau dann als gültig ansieht, wenn zwei (oder mehr) Objekte die gleiche TTC haben. Da für die Bewertung der Kollisionsgefahr nur die kleinste TTC von Bedeutung ist, genügt es, wenn für die georteten Objekte nur die kleinsten TTCs auf Übereinstimmung geprüft werden.

Ein Schattenobjekt unterscheidet sich von dem zugehörigen realen Objekt nicht nur durch den größeren Abstand und die größere Relativgeschwindigkeit, sondern auch durch eine deutlich kleinere Amplitude des empfangenen Signals. Anhand dieses Kriteriums kann überprüft werden, ob das geortete Objekt mit dem doppelten Abstand und der doppelten Relativgeschwindigkeit wirklich ein Schatten oder aber ein eigenständiges reales Objekt ist.

Bei einem winkelauflösenden Radarsystem wird die Querablage eines Objektes, d.h., die Position des Objekts relativ zum eigenen Fahrzeug in der Richtung senkrecht zur Fahrtrichtung, aus dem Abstand und dem gemessenen Azimutwinkel berechnet. Die Unterscheidung zwischen dem realen Objekt und seinem Schatten ermöglicht es somit auch, den richtigen Abstand für die Berechnung der Querablage des realen Objekts zugrunde zu legen.

### Zeichnung

Ein Ausführungsbeispiel der Erfindung ist in den Zeichnungen dargestellt und in der nachfolgenden Beschreibung näher erläutert.

Es zeigen:
- Figur 1: eine Skizze zur Erläuterung der Funktionsweise eines Radarsystems an ein Kraftfahrzeug;
- Figuren 2 und 3: Frequenz/Zeit-Diagramme für von einem FMCW-Radar gesendete und empfangene Signale;
- Figur 4: ein Beispiel für ein FMCW-Signal mit drei Frequenzrampen;
- Figur 5: Spektren von Zwischenfrequenzsignalen für zwei Objekte und für die drei Frequenzrampen nach Figur 5;
- Figur 6: ein Relativgeschwindigkeits/Abstands-Diagramm zur Erläuterung der Entstehung von Scheinobjekten bei einem FMCW-Radar;
- Figur 7: ein Spektrum eines Zwischenfrequenzsignals für ein reales Objekt und seinen durch Mehrfachreflexion entstandenen Schatten; und
- Figur 8: ein Flußdiagramm des Verfahrens zur Objektverifikation.

### Beschreibung des Ausführungsbeispiels

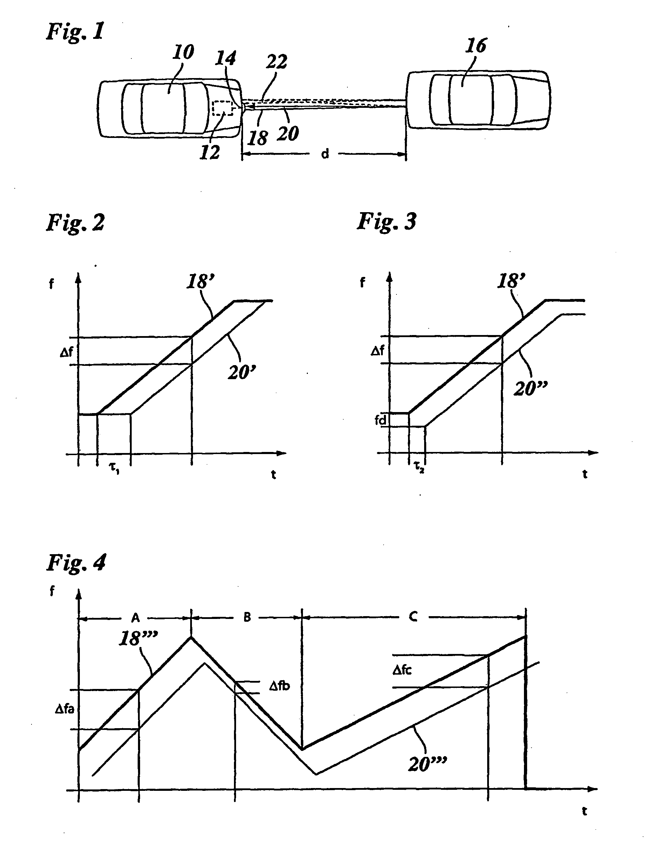

Figur 1 zeigt schematisch ein Fahrzeug 10, das mit einem Fahrerassistenzsystem 12, beispielsweise einem Kollisionsvermeidungssystem, und einem zugehörigen Radarsystem ausgerüstet ist. Von dem Radarsystem ist lediglich ein Radarsensor 14 gezeigt, der vorn am Fahrzeug eingebaut ist, um Objekte im Vorfeld des Fahrzeugs 10 zu orten. Als Beispiel für ein solches Objekt ist ein weiteres Fahrzeug 16 gezeigt.

Der Radarsensor 14 sendet ein Signal 18, das beispielsweise eine Frequenz in der Größenordnung von 77 GHz hat und sich in Form einer Keule nach vorn ausbreitet. Das Signal 16 wird, nachdem es eine dem Abstand d der Fahrzeuge entsprechende Distanz zurückgelegt hat, an der Rückfront des Fahrzeugs 16 reflektiert und erfährt dabei eine Dopplerverschiebung, die von der Relativgeschwindigkeit der beiden Fahrzeuge abhängig ist. Das reflektierte Signal 20 läuft zum Radarsensor 14 zurück und wird dort empfangen. Ein Teil des reflektierten Signals 20 trifft jedoch nicht wieder auf den Radarsensor 14, sondern wird an der Vorderfront des Fahrzeugs 10 erneut reflektiert, wie in Figur 1 durch gestrichelte Pfeile angedeutet wird. Dieses Signal wird nochmals am Fahrzeug 16 reflektiert und tritt dann, zum Teil und mit verringerter Amplitude, als mehrfach reflektiertes Signal 22 in den Radarsensor 14 ein. Das mehrfach reflektierte Signal 22 hat insgesamt den Weg 4d zurückgelegt, während das einfach reflektierte Signal 20 nur den Weg 2d zurückgelegt hat. Außerdem erfährt das mehrfach reflektierte Signal 22 bei der zweiten Reflexion am Fahrzeug 16 nochmals eine Dopplerverschiebung. Dieses Signal repräsentiert somit ein Scheinobjekt, sozusagen einen Schatten des Fahrzeugs 16, im doppelten Abstand und mit doppelter Relativgeschwindigkeit.

Im folgenden soll zunächst am Beispiel eines FMCW-Radars die Auswertung des nur einmal reflektierten Signals 20 erläutert werden.

In Figur 2 gibt eine Kurve 18' die Frequenz f des gesendeten Signals 18 als Funktion der Zeit t an. Diese Frequenz ist rampenförmig moduliert. Eine Kurve 20' gibt die Frequenz des empfangenen Signals 20 für den Fall an, daß das Fahrzeug 16 die Relativgeschwindigkeit v = 0 hat, seine Absolutgeschwindigkeit also gleich der des Fahrzeugs 10 ist. Es tritt somit keine Dopplerverschiebung auf, und die Kurve 20' ist gegenüber der Kurve 18 auf de Zeitachse um eine Laufzeit τ₁ verschoben, in der das Radarsignal den Weg 2d zurücklegt (τ₁ = 2d/c; c ist die Lichtgeschwindigkeit). Im Radarsensor 14 wird das empfangene Signal (Kurve 20') mit dem zum Empfangszeitpunkt gesendeten Signal (Kurve 18') gemischt. Man erhält so ein Zwischenfrequenzsignal, dessen Frequenz Δf dem Unterschied zwischen der gesendeten und der empfangenen Frequenz entspricht. Während der Dauer der Frequenzrampe ist Δf im wesentlichen konstant und proportional zu τ₁ sowie zur Rampensteigung m.

Figur 3 zeigt das gleiche Diagramm wie Figur 2 für den Fall, daß das Fahrzeug 16 einen kleineren Abstand hat, entsprechend einer kleineren Laufzeit τ₂, jedoch eine positive Relativgeschwindigkeit besitzt, sich also von dem Fahrzeug 10 entfernt. Das empfangene Signal, das hier durch eine Kurve 20" repräsentiert wird, weist daher eine negative Dopplerverschiebung fd auf. Die Beziehung zwischen Abstand und Relativgeschwindigkeit ist im gezeigten Beispiel gerade so beschaffen, daß die Dopplerverschiebung durch den kleineren Abstand gerade kompensiert wird, so daß das Zwischenfrequenzsignal die gleiche Frequenz Δf hat wie in Figur 2. Aus der Frequenz Δf lassen sich somit der Abstand und die Relativgeschwindigkeit nicht eindeutig bestimmen, sondern es wird lediglich eine bestimmte Beziehung zwischen diesen Größen festgelegt.

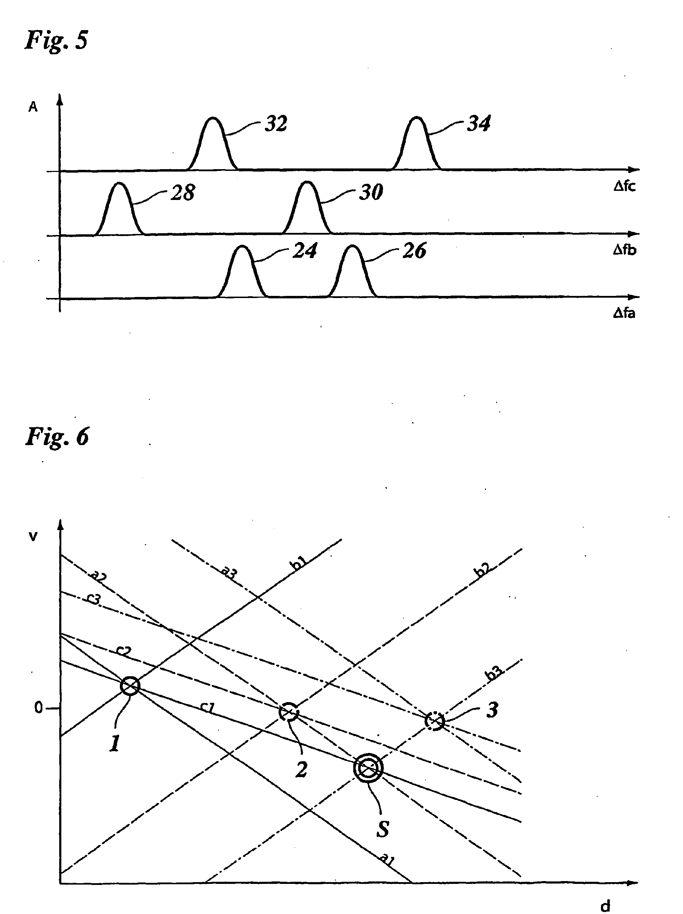

Figur 4 illustriert einen Weg, wie diese Mehrdeutigkeit beseitigt werden kann. Das gesendete Signal, hier repräsentiert durch eine Kurve 18"' wird während jedes Meßzyklus des Radarsensors 14 mit drei unterschiedlichen Frequenzrampen moduliert, nämlich einer steigenden Rampe A, einer fallenden Rampe B von gleicher Dauer und mit entgegengesetzt gleicher Steigung und nochmals einer steigenden Rampe C, die die doppelte Dauer aber nur die halbe Steigung hat. Die Kurve 20"' in Figur 4 gibt die Frequenz des empfangenen Signals an, die durch die Laufzeit und die Dopplerverschiebung beeinflußt ist. Auf der steigenden Rampe A wirken die Laufzeit und die Dopplerverschiebung additiv, nämlich beide im Sinne einer Vergrößerung einer Zwischenfrequenz Δfa. Auf der fallenden Rampe B hat das Zwischenfrequenzsignal dagegen den Wert Δfb, der gegeben ist durch die Differenz zwischen laufzeitbedingter Frequenzverschiebung und Dopplerverschiebung, und die laufzeitbedingte Frequenzverschiebung hat hier gegenüber der Rampe A das entgegengesetzte Vorzeichen. Die Summe Δfa + Δfb ist nur von der Dopplerverschiebung abhängig und gestattet somit eine Berechnung der Relativgeschwindigkeit. Die Differenz Δfa - Δb ist hingegen nur von der Laufzeit abhängig und gestattet somit eine Berechnung des Abstands d. Wenn nur ein einziges Objekt vorhanden ist, können somit der Abstand und die Relativgeschwindigkeit eindeutig bestimmt werden. Die dritte Rampe C wird benötigt, wenn zwei oder mehr Objekte gleichzeitig geortet werden. Dies soll im folgenden anhand der Figuren 5 und 6 näher erläutert werden.

Die für die drei Rampen A, B und C erhaltenen Zwischenfrequenzsignale werden digitalisiert und als Funktionen der Zeit aufgezeichnet. Diese Funktionen werden dann für jede Rampe gesondert einer schnellen Fouriertransformation unterzogen, um die entsprechenden Frequenzspektren zu bilden. In diesen Spektren zeichnet sich jedes geortete Objekt in der Form eines Peaks bei einer bestimmten Frequenz Δf ab.

Figur 5 zeigt als Beispiel die für die drei Rampen aufgenommenen Spektren, d.h., die Amplituden als Funktion der Frequenz Δfa, Δfb bzw. Δfc, für den Fall, daß zwei Objekte gleichzeitig geortet werden. Für die Rampe A erhält man somit zwei Peaks 24, 26, für die Rampe B zwei Peaks 28, 30 und für die Rampe C zwei Peaks 32, 34. Es ist jedoch noch nicht von vornherein klar, welche Peaks zu welchem der beiden Objekte gehören. Der Scheitel oder der Schwerpunkt jedes Peaks gibt jedoch einen Frequenzwert an, der für das betreffende Objekt die erwähnte Beziehung zwischen dem Abstand d und der Relativgeschwindigkeit v festlegt. Insgesamt erhält man so sechs verschiedene Beziehungen, die sich einem v-d-Diagramm gemäß Figur 6 als Geraden darstellen lassen. So erhält man z.B. in Figur 6 für vier Peaks auf den Rampen A und B die Geraden a1, a2, b1 und b2. Die beiden zugehörigen Objekte können entweder auf den Schnittpunkten von a1 mit b1 und a2 mit b2 oder auf den Schnittpunkten von a1 mit b2 und a2 mit b1 liegen. Nimmt man jedoch die beiden Peaks für die dritte Rampe C hinzu, so erhält man zwei weitere Geraden c1 und c2, und jedes der beiden Objekte muß auch auf einer dieser Geraden liegen. Damit sind die beiden Objekte 1 und 2 in Figur 6 durch die Schnittpunkte von jeweils drei Geraden eindeutig identifiziert, und ihre Abstände und Relativgeschwindigkeiten lassen sich direkt aus dem Diagramm ablesen.

Im folgenden sei nun angenommen, daß zusätzlich zu den beiden Objekten 1 und 2 in Figur 6 noch ein drittes Objekt 3 geortet wird, so daß in jedem der drei Spektren in Figur 5 noch ein zusätzlicher Peak vorhanden wäre. Durch diese zusätzlichen Peaks werden drei weitere Geraden a3, b3 und c3 definiert, die sich wiederum in einem Punkt schneiden und so das Objekt 3 identifizieren. Zufällig geht nun aber die Gerade b3 durch den Schnittpunkt der beiden Geraden a2 und c1, so daß die mögliche Existenz eines Objekts S am Schnittpunkt dieser drei Geraden vorgetäuscht wird. Ohne zusätzliche Informationen läßt sich in diesem Fall nicht entscheiden, welches der drei Objekte 1, 2, 3 und S real ist und welches nur ein Scheinobjekt ist. Im gezeigten Beispiel hat das Objekt S als einziges eine negative Relativgeschwindigkeit, d. h., sein Abstand zum Fahrzeug 10 nimmt ab, so daß von diesem Objekt die höchste Kollisionsgefahr ausgeht. Da sich nicht ausschließen läßt, daß dieses Objekt real ist, und da bei ein Kollisionsvermeidungssystem stets vom ungünstigsten Fall ausgegangen werden muß, müßte hier also unter Umständen eine Kollisionsfahndung ausgegeben werden. Auf diese Weise käme es zu einer Fehlwarnung.

Bei dem hier vorgeschlagenen Verfahren zur Objektverifikation werden solche Fehlwarnungen dadurch vermieden, daß reale Objekte zusätzlich anhand der Mehrfachreflexionen (Figur 1) verifiziert werden.

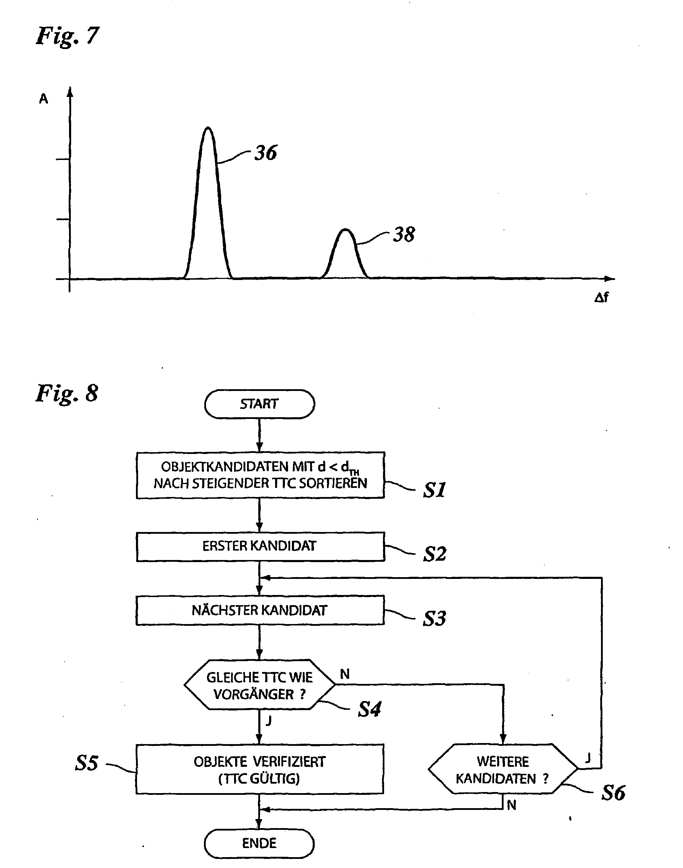

Figur 7 zeigt ein Spektrum, analog zu einem der Spektren in Figur 5, jedoch nur für nur eine Rampe und für nur ein einzelnes Objekt. Diese Objekt hinterläßt im Spektrum einen deutlich ausgeprägten Peak 36 und zusätzlich einen wesentlich schwächeren Peak 38, der durch das mehrfach reflektierte Signal 22 in Figur 1 verursacht wird. Für die Objekterkennung werden generell nur solche Peaks in den Spektren ausgewertet, die sich hinreichend deutlich über den Rauschpegel erheben und deren Scheitelwerte somit oberhalb einer bestimmten Schwellenwertes liegen. Bisher wurden die durch Mehrfachreflexionen verursachten Peaks als Rauschsignale behandelt, und der Schwellenwert war so hoch gewählt, daß diese Peaks nicht mit ausgewertet wurden. Bei dem erfindungsgemäßen Verfahren wird jedoch die Auswertungsschwelle so weit gesenkt, daß auch die durch Mehrfachreflexionen verursachten Peaks wie der Peak 38 als mögliche Objekte erkannt werden können.

Wenn man aufgrund der oben anhand von Figuren 2 bis 6 beschriebenen Prozedur den Abstand und die Relativgeschwindigkeit für den Peak 38 bestimmt, so erhält man für den Abstand gerade das Doppelte des Abstands, den man für den Peak 36 erhalten hat, und auch für die Relativgeschwindigkeit erhält man gerade den doppelten Wert. Auf diese Weise ist der Peak 38 als durch Mehrfachreflexion bedingter Schatten des realen Objekts zu identifizieren, daß den Peak 36 verursacht hat.

Jedes Objekt, dessen Abstand d kleiner ist als ein bestimmter Schwellenwert d_{TH} hinterläßt im Spektrum einen erkennbaren Schattenpeak. Der Schwellenwert d_{TH} ist um so größer, je größer die Sendeleistung des Radarsensors 14 ist. Für Scheinobjekte wie z.B. das Objekt S in Figur 6 gibt es dagegen auch bei geringem Objektabstand keinen Schattenpeak. Durch das Fehlen eines Schattenpeaks kann somit ein Objekt als Scheinobjekt eliminiert werden, oder umgekehrt kann durch das Vorhandensein des Schattenpeaks ein reales Objekt verifiziert werden.

Figur 8 zeigt als Beispiel ein Flußdiagramm einer Prozedur, die in dem Fahrerassistenzsystem 12 implementiert ist und dort zur Objektverifikation dient. Als einfaches Beispiel soll dabei angenommen werden, daß die wesentliche Funktion des Fahrerassistenzsystems 12 darin besteht, ein Kollisionswarnsignal oder einen Notbremsbefehl zu erzeugen, wenn ein Objekt geortet wird, von dem eine akute Kollisionsgefahr ausgeht. Als Maß für die Kollisionsgefahr dient die "Time to Collision" TTC, also die Zeit, die bis zur Kollision noch vergehen würde, wenn die Relativgeschwindigkeit des Objekts unverändert bleibt. Für ein Objekt im Abstand d mit der (negativen) Relativgeschwindigkeit v gilt somit: TTC = -d/v. Wenn man für mindestens ein Objekt eine TTC erhält, die unterhalb eines bestimmten Schwellenwertes liegt und wenn das zugehörige Objekt als reales Objekt verifiziert wurde, wird eine Kollisionswarnung bzw. ein Bremsbefehl ausgegeben.

Die in Figur 8 gezeigte Prozedur wird aufgerufen, wenn in einem gegebenen Meßzyklus des Radarsensors die Abstände und Relativgeschwindigkeiten der Objekte bestimmt wurden (wie in Figur 6), ggf. einschließlich nicht eliminierbarer Scheinobjekte. Im hier beschriebenen Beispiel wird die Prozedur nur dann aufgerufen, wenn die Anzahl der potentiellen Objekte, einschließlich der Scheinobjekte, größer ist als die Objektanzahl die durch Anzahl der Peaks in jedem Spektrum (Fig 5) gegeben ist.

Die Objektverifikation mit Hilfe der Mehrfachreflexion kann nur für potentielle Objekte durchgeführt werden, deren Abstand d kleiner ist als dₜₕ. Diese Einschränkung ist hinnehmbar, da von Objekten mit größerem Abstand im allgemeinen keine Kollisionsgefahr ausgehen wird. Falls dies ausnahmsweise doch der Fall sein sollte, wird das Objekt spätestens dann verifiziert werden, wenn der Abstand unter d_{TH} abgenommen hat. Durch geeignete Wahl der Leistung des Radarsensors 10 läßt sich erreichen, daß d_{TH} so groß wird, daß das eigene Fahrzeug 10 noch rechtzeitig abgebremst und somit die Kollision abgewendet werden kann.

Objekte, deren Abstand größer ist als d_{TH}, werden im allgemeinen auch nicht zu einer Kollisionswarnung führen, so daß sich die Gefahr von Fehlwarnungen auch nicht wesentlich erhöht, wenn solche Objekte nicht als Scheinobjekte eliminiert, sondern als reale Objekte behandelt werden. Im gezeigten Beispiel wird deshalb für diese Objekte auf eine zusätzliche Verifikation verzichtet.

Für die Objektkandidaten, die die genannte Abstandsbedingung d < d_{TH} erfüllen, werden in Schritt S1 die Zeiten TTC berechnet, und die Kandidaten werden in einer Liste nach steigenden TTC sortiert. In Schritt S2 wird dann der erste Kandidat aus der Liste aufgerufen, also das Objekt mit der kleinsten TTC. In Schritt S3 beginnt dann eine Schleife, in der nacheinander die nachfolgenden Kandidaten aufgerufen werden. In Schritt S4 wird geprüft, ob der neu aufgerufene Kandidat innerhalb bestimmter Genauigkeitsgrenzen die gleiche TTC wie sein Vorgänger hat. Wenn es sich bei den beiden Kandidaten um ein reales Objekt und seinen durch Mehrfachreflexion erzeugten Schatten handelt, ist diese Bedingung erfüllt, da sich der Faktor 2 in den gemessenen Abständen und Relativgeschwindigkeiten bei der Berechnung von TTC herauskürzt. In diesem Fall ist also das Objekt mit dem kleineren Abstand (und der größeren Amplitude) als reales Objekt verifiziert, und in jedem Fall ist die übereinstimmende TTC als ein gültiger Wert zu betrachten, der dann von der Objektverifikationsprozedur an das Hauptprogramm zurückgegeben wird und eine entsprechende Systemreaktion auslöst (Schritt S5).

Wenn in Schritt S4 die TTCs für die beiden betrachteten Kandidaten nicht übereinstimmen, so kann der erste dieser beiden Kandidaten als Scheinobjekt verworfen werden. In Schritt S6 wird dann geprüft, ob noch weitere Kandidaten in der Liste vorhanden sind. Wenn dies der Fall ist, erfolgt ein Rücksprung zu Schritt S3, wo der nächste Kandidat aufgerufen wird und ein nächster Durchlauf durch die Schleife beginnt. In Schritt S4 werden somit jeweils zwei Kandidaten verglichen, die in der Liste unmittelbar aufeinanderfolgen. Sobald dabei zwei übereinstimmende TTCs gefunden werden, wird die Schleife mit S5 verlassen, und die Prozedur bricht ab. Es ist zwar möglich, daß die Liste noch weitere reale Objekte enthält, doch sind deren TTCs nicht relevant, da sie jedenfalls größer sind als die gefundene gültige TTC. Falls in Schritt S6 keine weiteren Kandidaten in der Liste vorhanden sind, wird die Prozedur beendet, ohne daß eine gültige TTC gefunden wurde.

Im beschriebenen Beispiel besteht die charakteristische Signatur für Mehrfachreflexionen darin, daß das reale Objekt und sein Schatten die gleiche TTC haben. Wahlweise kann auch die etwas schärfere Bedingung benutzt werden, daß der Schatten im Verhältnis zum realen Objekt die doppelte Relativgeschwindigkeit und den doppelten Abstand hat.

## Patentansprüche

1. Verfahren zur Objektverifikation in Radarsystemen für Kraftfahrzeuge, mit denen Abstände (d) und Relativgeschwindigkeiten (v) von georteten Objekten (16; 1, 2, 3, S) anhand von empfangenen Radarechos bestimmt werden; indem in den empfangenen Radarechos nach der Signatur von Mehrfachreflexionen (22) gesucht wird und bei Vorhandensein einer Mehrfachreflexion das Objekt als reales Objekt verifiziert wird, **dadurch gekennzeichnet, daß** die zur Objektverifikation überprüft Signatur darin besteht, daß für zwei gleichzeitig geortete potentielle Objekte der Quotient (TTC) TTC=d/ᵥᵣₑₗ aus Abstand (d) und Relativgeschwindigkeit Vᵣₑₗ übereinstimmt.

2. Verfahren nach Anspruch 1, **dadurch gekennzeichnet, daß** die überprüfte Signatur darin besteht, daß für zwei gleichzeitig geortete potentielle Objekte der Abstand d des einen Objekts ein ganzzahliges Vielfaches des Abstands des anderen Objekts ist und zugleich die Relativgeschwindigkeit vᵣₑₗ des einen Objekts das gleiche ganzzahlige Vielfache der Relativgeschwindigkeit des anderen Objekts ist.

3. Verfahren nach einem der vorstehenden Ansprüche, **dadurch gekennzeichnet, daß** die Objektverifikation anhand der Signatur von Mehrfachreflexionen auf potentielle Objekte beschränkt wird, deren Abstand (d) kleiner ist als ein bestimmter Schwellenwert (d_{TH}), wobei dieser Schwellenwert so gewählt ist, daß für Objekte, deren Abstand kleiner ist als dieser Schwellenwert, zumindest die Mehrfachreflexionen erster Ordnung ein detektierbares Signal ergeben.

4. Verfahren nach einem der vorstehenden Ansprüche, **dadurch gekennzeichnet, daß** aus den empfangenen Radarechos für jedes geortete Objekt mindestens drei voneinander unabhängige Beziehungen zwischen der Relativgeschwindigkeit (vᵣₑₗ) und dem Abstand (d) abgeleitet werden, und daß die Verifikation anhand der Signatur von Mehrfachreflexionen nur für solche Objekte (1, 2, 3, S) erfolgt, für welche die genannten mindestens drei Beziehungen miteinander konsistent sind.

5. Fahrerassistenzsystem für Kraftfahrzeuge, **dadurch gekennzeichnet, daß** darin ein Verfahren nach einem der Ansprüche 1 bis 4 implementiert ist

6. Fahrerassistenzsystem nach Anspruch 5, **dadurch gekennzeichnet, daß** es dazu ausgebildet ist, auf der Grundlage der Abstände (d) und Relativgeschwindigkeiten (vᵣₑₗ) der georteten und verifizierten Objekte anhand mindestens eines Kriteriums, das auf eine Kollisionsgefahr hinweist, eine Wam-und/oder Sicherheitsfunktion auszulösen.

7. Fahrerassistenzsystem nach Anspruch 6, **dadurch gekennzeichnet, daß** es dazu ausgebildet ist, für die georteten und verifizierten Objekte den kleinsten Quotienten (TTC) TTC=d/vᵣₑₗ aus Abstand (d) und Relativgeschwindigkeit (vᵣₑₗ) zu ermitteln und anhand eines Kriteriums für diesen Quotienten die Wam- und/oder Sicherheitsfunktion auszulösen.

8. Fahrerassistenzsystem nach einem der Ansprüche 5 bis 7, **dadurch gekennzeichnet, daß** es als Radarsystem ein FMCW-Radar aufweist

## Claims

1. Object verification method in radar systems for motor vehicles, with which distances (d) and relative speeds (v) of located objects (16; 1, 2, 3, S) are determined on the basis of received radar echoes in that the signature of multiple reflections (22) is sought in the received radar echoes and if a multiple reflection is present the object is verified as a real object, **characterized in that** the signature which is checked for object verification consists in the fact that the quotient (TTC) TTC=d/vᵣₑₗ of the distance (d) and the relative speed (Vᵣₑₗ) corresponds for two potential objects which are located at the same time.

2. Method according to Claim 1, **characterized in that** the checked signature consists in the fact that for two potential objects which are located at the same time the distance d of the one object is an integral multiple of the distance of the other object and at the same time the relative speed Vᵣₑₗ of the one object is the same integral multiple of the relative speed of the other object.

3. Method according to one of the preceding claims, **characterized in that** the object verification is limited, on the basis of the signature of multiple reflections, to potential objects whose distance (d) is shorter than a specific threshold value (d_{TH}), wherein this threshold value is selected such that for objects whose distance is shorter than this threshold value at least the multiple reflections of the first order yield a detectable signal.

4. Method according to one of the preceding claims, **characterized in that** at least three independent relationships between the relative speed (vᵣₑₗ) and the distance (d) are derived from the received radar echoes for each located object, and **in that** the verification on the basis of the signature of multiple reflections takes place only for objects (1, 2, 3, S) for which the specified at least three relationships are consistent with one another.

5. Driver assistance system for motor vehicles, **characterized in that** a method according to one of Claims 1 to 4 is implemented therein.

6. Driver assistance system according to Claim 5, **characterized in that** it is designed to trigger a warning function and/or safety function on the basis of the distances (d) and relative speeds (vᵣₑₗ) of the located and verified objects on the basis of at least one criterion which indicates a risk of a collision.

7. Driver assistance system according to Claim 6, **characterized in that** it is designed to determine the smallest quotient (TTC) TTC=d/vᵣₑₗ for the located and verified objects from the distance (d) and relative speed (vᵣₑₗ) and to trigger the warning function and/or safety function on the basis of a criterion for this quotient.

8. Driver assistance system according to one of Claims 5 to 7, **characterized in that** it has an FMCW radar as the radar system.

## Revendications

1. Procédé de vérification d'objet dans des systèmes radar pour véhicules automobiles, à l'aide desquels les distances (d) et les vitesses relatives (v) des objets localisés (16 ; 1, 2, 3, S) sont déterminées au moyen des échos de radar reçus en ce que la signature de réflexions multiples (22) est recherchée dans les échos radar reçus et, en présence d'une réflexion multiple, l'objet est confirmé comme étant un objet réel, **caractérisé en ce que** la signature vérifiée pour confirmer la présence de l'objet consiste en ce que pour deux objets potentiels localisés simultanément, le quotient (TTC) TTC = d/vᵣₑₗ de la distance (d) et de la vitesse relative (vᵣₑₗ) est identique.

2. Procédé selon la revendication 1, **caractérisé en ce que** la signature vérifiée consiste **en ce que** pour deux objets potentiels localisés simultanément, la distance (d) de l'un des objets est un multiple entier de la distance de l'autre objet et en même temps la vitesse relative (vᵣₑₗ) de l'un des objets est le même multiple entier de la vitesse relative de l'autre objet.

3. Procédé selon l'une des revendications précédentes, **caractérisé en ce que** la confirmation de la présence de l'objet au moyen de la signature des réflexions multiples est limitée aux objets potentiels dont la distance (d) est inférieure à une valeur de seuil donnée (d_{TH}), cette valeur de seuil étant choisie de telle sorte que pour les objets dont la distance est inférieure à cette valeur de seuil, au moins les réflexions multiples du premier ordre produisent un signal détectable.

4. Procédé selon l'une des revendications précédentes, **caractérisé en ce que** pour chaque objet localisé, au moins trois relations indépendantes les unes des autres entre la vitesse relative (vᵣₑₗ) et la distance (d) sont dérivées à partir des échos radar reçus, et **en ce que** la confirmation de la présence au moyen de la signature des réflexions multiples n'est effectuée que pour les objets (1, 2, 3, S) pour lesquels lesdites au moins trois relations sont cohérentes entre elles.

5. Système d'assistance à la conduite pour véhicules automobiles, **caractérisé en ce qu'**un procédé selon l'une des revendications 1 à 4 y est mis en oeuvre.

6. Système d'assistance à la conduite selon la revendication 5, **caractérisé en ce qu'**il est configuré pour déclencher une fonction d'alerte et/ou de sécurité en se basant sur les distances (d) et les vitesses relatives (vᵣₑₗ) des objets localisés et dont la présence est confirmée au moyen d'au moins un critère qui signale un risque de collision.

7. Système d'assistance à la conduite selon la revendication 6, **caractérisé en ce qu'**il est configuré pour déterminer, pour les objets localisés et dont la présence est confirmée, le plus petit quotient (TTC) TTC = d/vᵣₑₗ de la distance (d) et de la vitesse relative (vᵣₑₗ) et pour déclencher la fonction d'alerte et/ou de sécurité au moyen d'un critère pour ces quotients.

8. Système d'assistance à la conduite selon l'une des revendications 5 à 7, **caractérisé en ce qu'**il présente comme système radar un radar FMCW.
